# EUROPEAN PATENT SPECIFICATION

(11) **EP 2 251 498 B1**
(45) Date of publication and mention of the grant of the patent: **20.06.2012**
(21) Application number: 10161651.4
(22) Date of filing: 30.04.2010
(51) Int. Cl.: E04B 2/76, F16B 7/04, E04H 1/12

(54) **Support frame and relative assembly method**
Stützrahmen und entsprechendes Montageverfahren
Cadre de support et procédé d'assemblage associé

(30) Priority: 04.05.2009 IT UD20090084
(43) Date of publication of application: 17.11.2010
(73) Proprietor: Eltec S.n.c. di Polensig Gianluca & C., 34077 Ronchi dei Legionari (GO) (IT)
(72) Inventor: Polensig, Gianluca, 34077 Ronchi dei Legionari (GO) (IT)
(74) Representative: Petraz, Gilberto Luigi

(56) References cited:
- EP-A- 1 070 859
- DE-U1- 9 111 163
- FR-A- 2 685 403
- US-A- 3 672 710

## Description

### FIELD OF THE INVENTION

The present invention concerns a support frame usable for building structures, for interiors or exteriors, such as for example structures to contain lifts, elevators, goods lifts or other, or attachment structures for covering walls, panels or other. In particular, the support frame according to the present invention concerns the reciprocal connection and attachment of uprights and cross pieces that form the support frame.

The present invention also concerns the method of reciprocal assembly of the uprights and cross pieces in order to make the support frame.

### BACKGROUND OF THE INVENTION

Support frames are known, used to make building structures, for interiors or exteriors, for example for elevators, covering walls, panels or other, substantially comprising a plurality of uprights and cross pieces connected and attached to each other.

In particular, support frames are known from US 3 672 710 A, DE 91 11 163 U1, FR 2 685 403 A and EP 1 070 859 A, in which the cross pieces and uprights are connected and attached to each other by means of external attachment elements, such as corner brackets, separate connection components, ironware elements, welding or other known elements.

Generally, these known solutions not only entail a large number of attachment screws to anchor the corner bracket to the relative uprights and cross piece, but also an insufficient mechanical clamping action, since the corner bracket, no matter how strongly clamped by the screws, always has a tendency to act as an elastic hinge between the upright and cross piece, and the work axis of the screws is in any case external to the bulk of the upright and its neutral positioning axis.

Moreover, the screws are constantly subjected to a shearing force and act by friction on the parts; they are therefore subjected to wear and do not guarantee an effective clamping action.

Furthermore, in known solutions, assembly is performed by preparing the corner brackets at the desired heights on the upright. Subsequently the cross pieces are coupled by lateral and/or horizontal insertion from outside, so as to couple an external surface of the latter with the relative corner bracket.

This obligatory operating method is not always able to be actuated easily, particularly in conditions where the installation of the support frame is done in restricted spaces or where it is complex to work comfortably.

Moreover, this known operating method requires the intervention of at least two operators, where one inserts and holds the cross piece and the other prepares and clamps the attachment screws.

Another disadvantage of the state of the art is that, since the uprights and cross pieces are attached using external elements, all the electric and electronic cables must also be effected outside the components.

Purpose of the present invention is to achieve a support frame for a structure for interiors or exteriors, and to perfect a relative assembly method, which is simple and economic to make, which can be assembled quickly and efficiently even in restricted spaces, or in difficult places to operate, and which overcomes the disadvantages of the state of the art.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics or variants of the invention.

A support frame and an assembly method for a support frame according to the present invention is applied to make a building structure for interiors or exteriors, such as for example a structure for a lift, an elevator, a goods lift or suchlike, and also for an assembly structure for a covering wall or other.

The support frame according to the present invention comprises at least an upright and at least a cross piece, connected and attached to each other by means of relative assembly means.

According to a characteristic feature of the present invention, the assembly means comprise a first element mounted sliding along the height of the upright and provided with a connection portion, a second element attached to one end of the cross piece and having at least a connection seating conformed so as to house the connection portion inside it, and at least an attachment element able to cooperate with the first and second element both to consolidate the coupling of the connection portion and the connection seating, and also to fix the position of the first element with respect to a determinate height of the upright.

With the present invention, the assembly of the cross piece and the upright does not occur, as in the state of the art, by means of an external element attached to both, but both the upright and the cross piece comprise, associated with them, a relative element of the assembly means, so as to actuate a substantially direct reciprocal assembly thereof.

In this way, a substantially snap-in coupling is achieved between the parts in which the axis of action of the attachment element, for example a screw, also substantially coincides with the neutral axis of the upright, thus preventing the elastic hinge effect that is typical of corner brackets.

Therefore, the assembly of the cross piece and the upright is not only simplified but is also more stable and safe compared with known solutions.

Furthermore, by coupling the first and second element beforehand, at least in a provisional manner, it is possible to couple the cross piece to the upright in sliding manner, exploiting the sliding assembly of the first element along the height of the upright.

In this way, since no lateral assemblies of the cross piece on the upright are necessary, it is thus possible to position the cross piece from the inside, giving advantages in installations in restricted spaces and where it is difficult to operate from outside the frame.

Another advantage is that the attachment element acts through compression on the parts, and not through friction.

Above all, since the assembly means are divided into two parts, each associable respectively with the upright and the cross piece, they can be at least partly pre-assembled on the upright and the cross piece before final assembly.

According to a variant, the upright comprises at least a through longitudinal seating and the first element comprises at least an attachment plate sliding inside the longitudinal seating, and a connection element mounted on the attachment plate outside the longitudinal seating and conformed to be disposed inside the connection seating.

According to another variant, the second element comprises an attachment terminal mounted at one end of the cross piece and having a connection portion on which the connection seating is made, and conformed in coordination with the attachment plate and the connection element.

According to another variant, the second element comprises an attachment terminal having an attachment part able to be disposed inside the cross piece and clamped to it through expansion.

According to another variant, the clamping through expansion is actuated by a wedge element cooperating with a conical fork.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view of a support frame according to the present invention, in a first assembly step;
- fig. 2 is a three-dimensional view of the support frame in fig. 1, in a second assembly step;

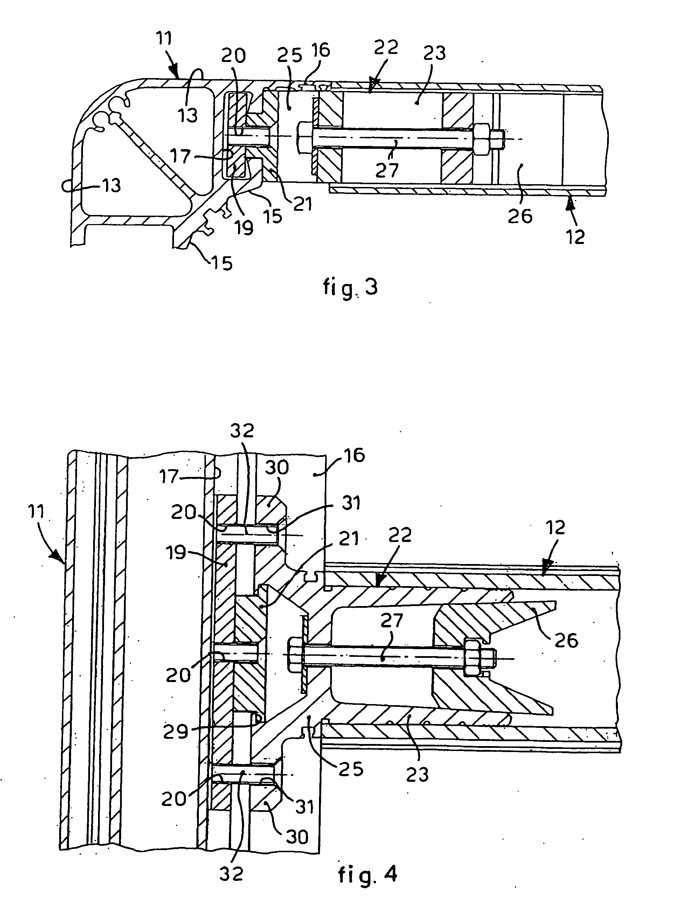

- fig. 3 shows a first cross section of a part of the support frame in fig. 2;
- fig. 4 shows a second cross section of a part of the support frame in fig. 2.

### DETAILED DESCRIPTION OF A PREFERENTIAL FORM OF EMBODIMENT

With reference to the attached drawings, the reference number 10 denotes generally a support frame for making a building structure for interiors or exteriors, in this case a containing structure for a lift, an elevator, a goods lift or suchlike.

It cannot be excluded that the support frame 10 according to the present invention can equally be used to make different building structures, such as for example those used to attach covering walls, frames, sound-proofing panels or other.

The support frame 10 comprises a plurality of uprights 11 with a substantially vertical disposition, and a plurality of cross pieces 12 with a substantially horizontal disposition.

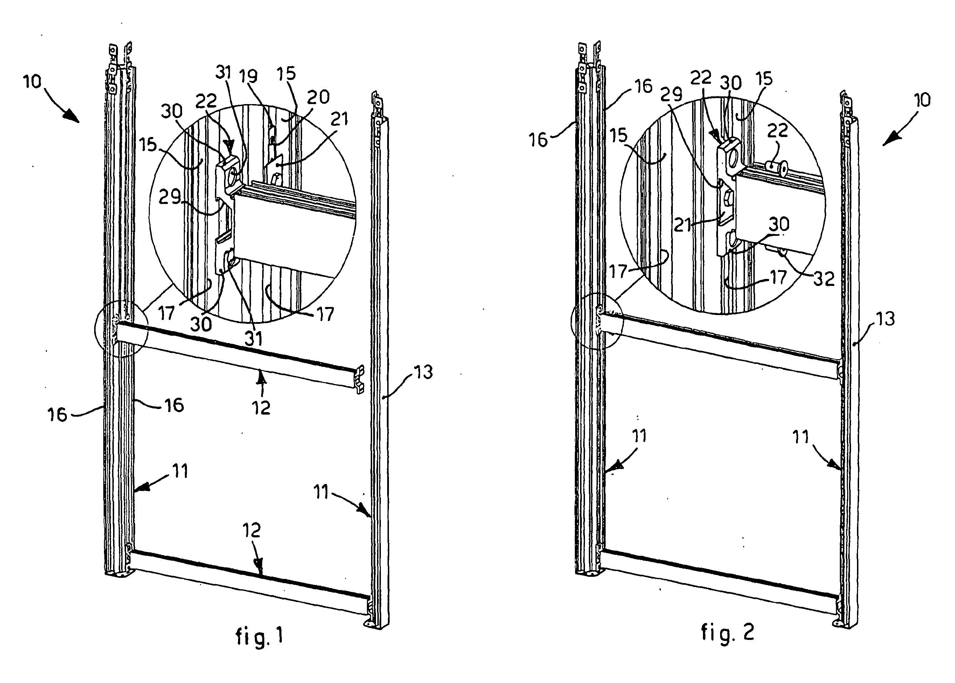

In the form of embodiment shown in figs. 1 and 2, each cross piece 12 is connected at the relative ends to two substantially parallel uprights 11. In this case, two cross pieces 12 are shown, attached at different heights with respect to the uprights 11.

In this case, each upright 11 is made of aluminum or an alloy thereof, and is a corner component of the structure.

Therefore, the upright 11 is conformed so as to be able to provide the assembly at the same height of two cross pieces 12, keeping them substantially orthogonal with respect to each other.

According to a variant, the upright 11 is conformed to provide the assembly of a single cross piece 12 at a determinate height, and also to provide the assembly of two cross pieces 12 at the same height, but with a reciprocal corner disposition other than an orthogonal one, for example at about 180°, about 45° and others.

In particular, in the configuration shown here, each upright 11 has a substantially quadrangular cross section and provides two external faces 13, contiguous to each other, and two internal faces 15, for assembly purposes.

The two external faces 13 are surface finished, connected to each other on the common edge and define respective covering wings 16, extending toward the outside of the upright 11.

The covering wings 16 allow to dispose packings and/or other components for the assembly and insulation of a closing panel, for example made of glass.

Advantageously, on the internal surface of each covering wing 16 grooves and attachment teeth are provided, for the snap-in attachment of the packings. This solution allows a quick and simple assembly of the packings, and also enables the glass or the panel used to complete the support frame 10 to be pre-assembled and assembled from the inside.

The two internal faces 15 comprise each a through longitudinal seating 17, having a substantially rectangular cross section open toward the outside of the upright 11, toward the internal face 15. The opening toward the internal face 15 is advantageously smaller than the width of the through longitudinal seating 17, so as to prevent an element housed inside it from freely coming out of the opening.

In fact, inside the through longitudinal seating 17 an attachment plate 19 is disposed sliding, which has a cross section substantially equivalent to and coordinated with that of the through longitudinal seating 17.

The attachment plate 19 also comprises three threaded holes 20, made in a row and disposed in correspondence with the aperture of the through longitudinal seating 17.

A connection base 21 is screwed to the central threaded hole 20, and is disposed outside the through longitudinal seating 17, protruding from the relative internal face 15.

In particular, the connection base 21 has a substantially T-shaped cross section, but it is not excluded that it may also be trapezoid, or dove-tailed.

Each cross piece 12 is made with a hollow aluminum section, or an alloy thereof

An attachment terminal 22 is associated with each end of each cross piece 12, and comprises an attachment part 23 disposed inside the cross piece 12, and a connection part 25 outside the cross piece 12 and conformed in a coordinated manner with the attachment plate 19 and the connection base 21.

In particular, the attachment part 23 is conformed substantially as a fork and comprises inside it a wedge element 26, mobile inside the fork by means of a threaded tie rod 27, in this case a screw.

The wedge element 26, moving inside the fork, causes the fork to spread wide so as to define the clamping of the attachment part 23 inside the cross piece 12.

Advantageously, the fork type attachment part 23 is conformed conical inside, so as to cooperate in an optimum manner with the wedge element 26, and is knurled externally so as to increase the conditions of friction and attachment with the internal part of the cross piece 12.

The connection part 25 comprises a connection seating 29 having shape complementary to the connection base 21, so as to house the latter inside it.

The reciprocal conformation of the connection base 21 and the relative connection seating 29 is such that the cross piece 12 can be assembled by lateral insertion with respect to the upright 11.

The connection part 25 also comprises two attachment feet 30, disposed lateral and on opposite sides with respect to the connection seating 29. Each attachment foot 30 comprises a through hole 31.

When the attachment terminal 22 is in its assembled condition with the connection base 21, the two through holes 31 are in correspondence with the lateral threaded holes 20 of the attachment plate 19.

The attachment feet 30 rest with a lower surface on the internal face 15 of the upright 11.

Relative clamping screws 32 are disposed through the through holes 31 and are screwed into the threaded holes 20.

Screwing the screws inside the threaded holes 20 causes a gripping effect of one edge of the through longitudinal seating 17 between the attachment plate 19 and the attachment pins 30 of the attachment terminal 22.

In this way, not only is the secure and stable connection determined between the upright 11 and the cross piece 12, but also the attachment plate 19 is prevented from sliding inside the through longitudinal seating 17.

Therefore, the correct assembly height of the cross piece 12 with respect to the upright 11 is established during the installation step of the support frame 10, and it is possible to vary and optimize the assembly of the parts according to the real operating conditions and requirements that occur.

The method to assemble the support frame 10 according to the present invention is as follows.

The attachment plate 19 is disposed inside the relative through longitudinal seating 17 of the upright 11. Advantageously, the relative connection base 21 is already associated with the attachment plate 19.

The relative attachment terminals 22 are associated at the ends to each cross piece 12, and clamped to the cross pieces 12 by acting on the tie rods 27, to determine the movement of the wedge elements 26.

The attachment plate 19 is provisionally positioned at the desired height with respect to the upright 11, and the cross piece 12 is inserted laterally from inside the frame 10, taking the connection seating 29 into cooperation with the connection base 21.

Once the connection base 21 has been completely disposed in the relative connection seating 29, the clamping screws 32 are positioned and tightened, so as to consolidate the reciprocal attachment of the parts and to determine the positioning of the attachment plate 19 with respect to the height of the upright 11.

It is clear, however, that modifications and/or additions of parts or steps may be made to the support frame 10 and the relative assembly method as described heretofore, without departing from the field and scope of the present invention.

For example, it comes within the field of the present invention to provide that relative shaped bushings and platelets, made of plastic material with high resistance to compression, are associated with the attachment plate 19 and the clamping screws 32, so as to define a desired insulation between the steel parts (screws, platelets, etc...) and the aluminum parts (uprights, cross pieces, attachment terminals etc...). This solution is advantageously applied for the installation of the support frame 10 on external decks of ships or other structures greatly exposed to wet or saline environments.

According to a variant, on each screw 32 provided, relative covering elements are disposed, possibly in common with the glass-holding sections for the assembly of the glass or panel that complete the support frame 10.

It also comes within the field of the present invention to provide that inside each upright 11 and each cross piece 12 grooves, hooks, pipes or other are provided, for cabling electric cables or data transport cables, so as to provide cabling inside the support frame 10 without needing raceways or other external auxiliary structures.

It is also clear that, although the present invention has been described with reference to specific examples, a person of skill in the art shall certainly be able to achieve many other equivalent forms of support frame and relative assembly method, having the characteristics as set forth in the claims and hence all coming within the field of protection defined thereby.

## Claims

1. Support frame for the construction of a building structure, such as covering walls of partition walls, comprising at least an upright (11) and at least a cross piece (12) connected and attached to each other by means of relative assembly means comprising a first element (19) slidably mounted along the height of the upright (11) and provided with a connection portion (21), a second element (22) attached to one end of the cross piece (12) and having at least a connection seating (29) conformed so as to accommodate inside it the connection portion (21), and at least an attachment element (32) able to cooperate with the first element (19) and the second element (22), both to consolidate the coupling of the connection portion (21) and the connection seating (29) and also to fix the position of the first element (19) with respect to a determinate height of the upright (11), **characterized in that** said connection portion (21) and said connection seating (29) comprise attachment means having a reciprocal conformation such that said cross piece (12) is mounted by lateral insertion on said upright (11), with respect to the longitudinal axis of the upright (11).

2. Support frame as in claim 1, **characterized in that** the upright (11) comprises at least a through longitudinal seating (17) and the first element comprises at least an attachment plate (19) sliding in said longitudinal seating (17), and the connection portion comprises a connection element (21) mounted on said attachment plate (19) outside said longitudinal seating (17) and conformed so as to be disposed inside the connection seating (29).

3. Support frame as in claim 2, **characterized in that** the second element comprises an attachment terminal (22) mounted at one end of the cross piece (12) and having a connection portion (25) on which the connection seating (29) is made and conformed in a coordinated manner with the attachment plate (19) and with the connection element (21).

4. Support frame as in claim 2 or 3, **characterized in that** the second element comprises an attachment terminal (22) having an attachment part (23) able to be disposed inside the cross piece (12) and clamped thereto by expansion.

5. Support frame as in claim 4, **characterized in that** the attachment part (23) is conformed as a conical fork and is able to cooperate with a wedge element (26) that causes it to spread wide inside the cross piece (12).

6. Support frame as in any claim from 2 to 5, **characterized in that** the attachment plate (19) also comprises a plurality of threaded holes (20), made in a row and disposed in correspondence with the aperture of the longitudinal seating (17), in order to allow the attachment of the connection element (21) and the attachment terminal (22).

7. Support frame as in any claim from 3 to 6, **characterized in that** the attachment terminal (22) comprises two attachment feet (30), disposed lateral and on opposite sides with respect to the connection seating (29) and provided with respective through holes (31) disposed in correspondence with the lateral threaded holes (20) of the attachment plate (19).

8. Assembly method for a support frame for the construction of a building structure, such as covering walls of partition walls, comprising at least an upright (11) and at least a cross piece (12) connected and attached to each other by means of relative assembly means, said method providing at least an assembly step in which by means of assembly means comprising a first element (19) slidably mounted along the height of the upright (11) and provided with a connection portion (21), a second element (22) attached to one end of the cross piece (12) and having at least a connection seating (29) conformed so as to accommodate inside it the connection portion (21), and at least an attachment element (32) able to cooperate with the first element (19) and the second element (22), both the coupling of the connection portion (21) and the connection seating (29) is consolidated and also the position of the first element (19) is fixed with respect to a determinate height of the upright (11), **characterized in that** said connection portion (21) and said connection seating (29) comprise attachment means having a reciprocal conformation such that said cross piece (12) is mounted by lateral insertion on said upright (11), with respect to the longitudinal axis of the upright (11).

## Patentansprüche

1. Stützrahmen zum Bau einer Gebäudestruktur, wie zum Beispiel Wandverkleidungen von Trennwänden, umfassend zumindest einen Pfosten (11) und zumindest ein Querteil (12), welche durch relative Montagemittel verbunden und aneinander befestigt sind, umfassend ein erstes Element (19), welches entlang der Höhe des Pfostens (11) verschiebbar montiert ist und mit einem Verbindungsteil (21) versehen ist,
ein zweites Element (22), welches an einem Ende des Querteils (12) befestigt ist und zumindest eine Verbindungsaufnahme (29) besitzt, welche derart angepasst ist, um darin den Verbindungsteil (21) aufzunehmen,
und zumindest ein Befestigungselement (32), welches mit dem ersten Element (19) und dem zweiten Element (22) zusammenwirken kann, um sowohl die Kupplung des Verbindungsteils (21) und der Verbindungsaufnahme (29) zu konsolidieren als auch die Position des ersten Elements (19) in Bezug auf eine bestimmte Höhe des Pfostens (11) zu fixieren,
**dadurch gekennzeichnet, dass** der Verbindungsteil (21) und die Verbindungsaufnahme (29) Befestigungsmittel umfassen, welche eine gegenseitige Anpassung besitzen derart, dass der Querteil (12) durch seitliches Einsetzen an dem Pfosten (11) montiert ist, in Bezug auf die Längsachse des Pfostens (11).

2. Stützrahmen gemäß Anspruch 1, **dadurch gekennzeichnet, dass** der Pfosten (11) zumindest eine durchgehende Längsaufnahme (17) umfasst und dass das erste Element zumindest eine Befestigungsplatte (19) umfasst, welche in der Längsaufnahme (17) verschiebbar ist, und dass der Verbindungsteil ein Verbindungselement (21) umfasst, welches an die Befestigungsplatte (19) außerhalb der Längsaufnahme (17) montiert ist und derart angepasst ist, dass es innerhalb der Verbindungsaufnahme (29) angeordnet sein kann.

3. Stützrahmen gemäß Anspruch 2, **dadurch gekennzeichnet, dass** das zweite Element einen Befestigungsanschluss(22) umfasst, welcher an einem Ende des Querteils (12) montiert ist und einen Verbindungsbereich (25) besitzt, an welchem die Verbindungsaufnahme (29) in einer mit der Befestigungsplatte (19) und mit dem Verbindungselement (21) abgestimmten Weise gebildet und angepasst ist.

4. Stützrahmen gemäß Anspruch 2 oder 3, **dadurch gekennzeichnet, dass** das zweite Element einen Befestigungsanschluss(22) umfasst, welcher einen Befestigungsteil (23) besitzt, welcher innerhalb des Querteils (12) anordenbar ist und daran durch Expansion klemmbar ist.

5. Stützrahmen gemäß Anspruch 4, **dadurch gekennzeichnet, dass** der Befestigungsteil (23) als konische Gabel angepasst ist und mit einem Keilelement (26) zusammenwirkbar ist, welches den Befestigungsteil (23) veranlasst, sich weit in dem Querteil (12) auszudehnen.

6. Stützrahmen gemäß einem der Ansprüche 2 bis 5, **dadurch gekennzeichnet, dass** die Befestigungsplatte (19) auch eine Vielzahl an Gewindelöchern (20) umfasst, welche in einer Reihe gebildet sind und in Übereinstimmung mit der Öffnung der Längsaufnahme (17) angeordnet sind, um die Befestigung des Verbindungselements (21) und der Befestigungsklemme (22) zu erlauben.

7. Stützrahmen gemäß einem der Ansprüche 3 bis 6, **dadurch gekennzeichnet, dass** der Befestigungsanschluss (22) zwei Befestigungsfüße (30) umfasst, welche seitlich und auf gegenüberliegenden Seiten in Bezug auf die Verbindungsaufnahme (29) angeordnet sind und welche mit entsprechenden Durchgangslöchern (31) bereitgestellt sind, welche in Übereinstimmung mit den seitlichen Gewindelöchern (20) der Befestigungsplatte (19) angeordnet sind.

8. Fertigungsverfahren für einen Stützrahmen zum Bau einer Gebäudestruktur, wie zum Beispiel Wandverkleidungen von Trennwänden, umfassend zumindest einen Pfosten (11) und zumindest einen Querteil (12), welche durch relative Montagemittel verbunden und miteinander befestigt sind, wobei das Verfahren zumindest einen Montageschritt bereitstellt, in welchem durch Montagemittel umfassend ein erstes Element (19), welches entlang der Höhe des Pfostens (11) verschiebbar montiert ist und mit einem Verbindungsteil (21) bereitgestellt ist,
ein zweites Element (22), welches an einem Ende des Querteils (12) befestigt ist und zumindest eine Verbindungsaufnahme (29) besitzt, welche derart angepasst ist, um darin den Verbindungsteil (21) aufzunehmen, und
zumindest ein Befestigungselement (32), welches mit dem ersten Element (19) und dem zweiten Element (22) zusammenwirken kann, sowohl die Kupplung des Verbindungsteils (21) und der Verbindungsaufnahme (29) konsolidiert sind, als auch die Position des ersten Elements (19) in Bezug auf eine bestimmte Höhe des Pfostens (11) fixiert ist,
**dadurch gekennzeichnet, dass** der Verbindungsteil (21) und die Verbindungsaufnahme (29) Befestigungsmittel umfassen, welche eine gegenseitige Anpassung besitzen derart, dass der Querteil (12) durch seitliches Einsetzen an dem Pfosten (11) montiert ist, in Bezug auf die Längsachse des Pfostens (11).

## Revendications

1. Cadre de support pour la construction d'une structure de bâtiment telle que des parois de revêtement de cloisons, comprenant au moins un montant (11) et au moins une traverse (12) raccordés et fixés l'un à l'autre au moyen de moyens de montage relatifs comprenant un premier élément (19) monté de façon coulissante sur la hauteur du montant (11) et doté d'une portion de raccordement (21), un second élément (22) fixé à une extrémité de la traverse (12) et ayant au moins un logement de raccordement (29) conformé pour accueillir en son sein la portion de raccordement (21), et au moins un élément de fixation (32) pouvant coopérer avec le premier élément (19) et le second élément (22), à la fois pour consolider le couplage de la portion de raccordement (21) et du logement de raccordement (29) et également pour fixer la position du premier élément (19) par rapport à une hauteur déterminée du montant (11), **caractérisé en ce que** ladite portion de raccordement (21) et ledit logement de raccordement (29) comprennent des moyens de fixation ayant une conformation réciproque de sorte que ladite traverse (12) est montée par insertion latérale sur ledit montant (11), par rapport à l'axe longitudinal du montant (11).

2. Cadre de support selon la revendication 1, **caractérisé en ce que** le montant (11) comprend au moins un logement longitudinal traversant (17) et le premier élément comprend au moins une plaque de fixation (19) coulissant dans ledit logement longitudinal (17), et la portion de raccordement comprend un élément de raccordement (21) monté sur ladite plaque de fixation (19) à l'extérieur dudit logement longitudinal (17) et conformé de façon à être disposé à l'intérieur du logement de raccordement (29).

3. Cadre de support selon la revendication 2, **caractérisé en ce que** le second élément comprend un embout de fixation (22) monté à une extrémité de la traverse (12) et ayant une portion de raccordement (25) sur laquelle le logement de raccordement (29) est réalisé et conformé d'une façon coordonnée avec la plaque de fixation (19) et avec l'élément de raccordement (21).

4. Cadre de support selon la revendication 2 ou 3, **caractérisé en ce que** le second élément comprend un embout de fixation (22) ayant une partie de fixation (23) pouvant être disposée à l'intérieur de la traverse (12) et pincée sur cette dernière par dilatation.

5. Cadre de support selon la revendication 4, **caractérisé en ce que** la partie de fixation (23) est conformée comme une fourche conique et est capable de coopérer avec un élément de cale (26) qui l'amène à se déployer à l'intérieur de la traverse (12).

6. Cadre de support selon l'une quelconque des revendications 2 à 5, **caractérisé en ce que** la plaque de fixation (19) comprend en outre une pluralité de trous filetés (20) constituée en une rangée et disposée en correspondance avec l'ouverture du logement longitudinal (17), afin de permettre la fixation de l'élément de raccordement (21) et de l'embout de fixation (22).

7. Cadre de support selon l'une quelconque des revendications 3 à 6, **caractérisé en ce que** l'embout de fixation (22) comprend deux pattes de fixation (30), disposées latéralement et sur des côtés opposés par rapport au logement de raccordement (29) et dotées de trous traversants respectifs (31) disposés en correspondance avec les trous filetés latéraux (20) de la plaque de fixation (19).

8. Procédé de montage d'un cadre de support pour la construction d'une structure de bâtiment telle que des parois de revêtement de cloisons, comprenant au moins un montant (11) et au moins une traverse (12) raccordés et fixés l'un à l'autre au moyen de moyens de montage relatifs, ledit procédé proposant au moins une étape de montage dans laquelle, au moyen de moyens de montage comprenant un premier élément (19) monté de façon coulissante sur la hauteur du montant (11) et doté d'une portion de raccordement (21), un second élément (22) fixé à une extrémité de la traverse (12) et ayant au moins un logement de raccordement (29) conformé de façon à accueillir en son sein la portion de raccordement (21), et au moins un élément de fixation (32) pouvant coopérer avec le premier élément (19) et le second élément (22), à la fois le couplage de la portion de raccordement (21) et du logement de raccordement (29) est consolidé et également la position du premier élément (19) est fixée par rapport à une hauteur déterminée du montant (11), **caractérisé en ce que** ladite portion de raccordement (21) et ledit logement de raccordement (29) comprennent des moyens de fixation ayant une conformation réciproque de sorte que ladite traverse (12) est montée par insertion latérale sur ledit montant (11), par rapport à l'axe longitudinal du montant (11).
